(19) Europäisches Patentamt
European Patent Office
Office européen des brevets

(11) **EP 4 703 326 A1**

(12) **EUROPEAN PATENT APPLICATION**
published in accordance with Art. 153(4) EPC

(43) Date of publication:
**04.03.2026 Bulletin 2026/10**

(21) Application number: **24797154.2**

(22) Date of filing: **25.04.2024**

(51) International Patent Classification (IPC):
**C01D 7/00** $^{(2006.01)}$          **B01D 61/02** $^{(2006.01)}$

(52) Cooperative Patent Classification (CPC):
Y02P 10/20

(86) International application number:
**PCT/JP2024/016357**

(87) International publication number:
**WO 2024/225409 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 JP 2023075075**

(71) Applicant: **Toray Industries, Inc.
Tokyo 103-8666 (JP)**

(72) Inventors:
• **MIYAMOTO Ryoma
  Otsu-shi, Shiga 520-8558 (JP)**
• **AOYAMA Shigeru
  Otsu-shi, Shiga 520-8558 (JP)**
• **YOSHIZAKI Tomoya
  Otsu-shi, Shiga 520-8558 (JP)**

(74) Representative: **Kador & Partner Part mbB
Corneliusstraße 15
80469 München (DE)**

(54) **METHOD FOR RECOVERING ALKALI METAL SALT AND APPARATUS FOR RECOVERING ALKALI METAL SALT**

(57) The present invention is a method for recovering an alkali metal salt from a solution X that contains: a compound HA having a pKa value of 3.0-5.0 and/or an anion A that forms compound HA; and an alkali metal ion. The method includes: (1) a pH adjustment step for adjusting the pH of the solution X to 0-4.0 when the pH exceeds 4; (2) an aluminum salt addition step for adding an aluminum salt to the solution X so that the molar concentration of aluminum is at least 0.25 times the total molar concentration of anions A, which is the sum of the molar concentration of compound HA in the solution X and the molar concentration of anions A present as ions in the solution X; and (3) a nanofiltration step for separating alkali metal ions to the permeation side from the solution X by means of a nanofiltration membrane following step (1) and step (2).

EP 4 703 326 A1

**Description**

TECHNICAL FIELD

The present invention relates to a method for recovering an alkali metal salt and an apparatus for recovering an alkali metal salt.

BACKGROUND ART

In recent years, with the industrial and economic development of the world, the demand for mineral resources has been greatly increased. Among mineral resources that are widely and industrially indispensable in the semiconductor industry and the like, there are many resources that are technically difficult to extract as individual elements even when the reserves in the earth crust are large and are economically unprofitable due to a high mining and refining cost, or that are localized in specific regions. On the other hand, environmental problems have also been brought into sharp focus, and there is a desire to build a recycling-oriented society. In particular, from the viewpoint of reducing carbon dioxide emissions, the development of electric vehicles, and motors and batteries used therein has been accelerated. In particular, as for the batteries, a lithium ion secondary battery is expected as a main battery for electric vehicles because of an energy density and light weight thereof.

As an application of a lithium compound, for example, lithium carbonate is used for an electrode material of a lithium ion battery and a heat-resistant glass additive, and a surface acoustic wave filter. In particular, those having a high purity are used for filters and transmitters for mobile phones and car navigation systems. Lithium bromide is used as a refrigerant absorbent in an absorption refrigerator for large air conditioning in buildings, factories, and the like. Examples of applications of lithium hydroxide include a raw material for grease and lithium batteries (primary and secondary) for automobiles and the like. Examples of applications of metal lithium include a foil as a negative electrode material of a primary battery and a raw material for butyllithium for a synthetic rubber catalyst.

Lithium is collected from resources such as salt lake brines and ores, but a new lithium supply source is required for an increase in the demand for lithium for electric vehicle applications, and in particular, a technique for efficiently recovering lithium from a waste material and a waste liquid generated in a production process for the lithium ion battery is required.

For example, an electrolytic solution of a lithium ion battery is generally a lithium salt containing fluorine as a constituent element ($LiPF_6$, $LiBF_4$, $LiAsF_6$, or the like), but it is known that hydrolysis occurs due to mixing of moisture (see, for example, Non Patent Literature 1). When the electrolytic solution is hydrolyzed, the performance of the battery is deteriorated, and thus the electrolytic solution deteriorated during use in a production process for a lithium ion battery or the like is discarded. Since the electrolytic solution contains a large amount of lithium, recovery is required, but since fluorine contained in the electrolytic solution becomes an impurity when lithium is recovered as lithium carbonate or lithium hydroxide, separation is required.

Patent Literature 1 describes a method of obtaining a lithium hydroxide aqueous solution by heating an electrolyte, removing a fluorine-containing solvent, and leaching a residue with water.

CITATION LIST

PATENT LITERATURE

Patent Literature 1: JP2005-197149A

NON-PATENT LITERATURE

Non Patent Literature 1: Tetsuya Kawamura and two others, "Decomposition Reaction of LiPF6 Electrolytic Solution for Lithium Battery", Engineering Sciences Reports of Kyushu University, Interdisciplinary Graduate School of Engineering Sciences of Kyushu University, December, 2002, Vol. 24, No. 3, p. 281-288

SUMMARY OF INVENTION

TECHNICAL PROBLEM

However, in the method described in Patent Literature 1, although an amount of fluorine in the electrolyte is greatly reduced, a part of fluorine remains as lithium fluoride, and thus the method is insufficient for obtaining high purity lithium hydroxide or lithium carbonate.

Therefore, an object of the present invention is to provide a method capable of recovering an alkali metal salt with a high purity and a high recovery rate from a waste material, a waste liquid, an ore, and the like containing mineral resources.

SOLUTION TO PROBLEM

In order to achieve the above object, the present invention has the following configurations.

[1] A method for recovering an alkali metal salt from a solution X containing an alkali metal ion and at least one of a compound HA having a pKa of 3.0 or more and 5.0 or less and an anion A forming the compound HA, the method including the following steps (1) to (3),

(1) a pH adjustment step of adjusting a pH of the solution X to 0 or more and 4.0 or less when the pH is more than 4.0;
(2) an aluminum salt addition step of adding an aluminum salt to the solution X such that a molar concentration (mol/L) of aluminum is 0.25 times or more a total anion A molar concentration (mol/L), which is a sum of a molar concentration (mol/L) of the compound HA in the solution X and a molar concentration (mol/L) of the anion A present as an ion in the solution X; and
(3) a nanofiltration step of separating, from the solution X after the step (1) and the step (2), the alkali metal ion to a permeation side by using a nanofiltration membrane.

[2] The method for recovering an alkali metal salt according to the above [1], in which the pH of the solution X is adjusted to 1.0 or more and 3.0 or less in the step (1).
[3] The method for recovering an alkali metal salt according to the above [1] or [2], in which the pKa of the compound HA is 3.0 or more and 4.0 or less.
[4] The method for recovering an alkali metal salt according to any one of the above [1] to [3], in which in the step (2), the aluminum salt is added to the solution X so as to satisfy any one of the following conditions (a) to (d),

condition (a): when the pH of the solution X is 1.0 or more and 1.4 or less, the molar concentration of aluminum is 0.5 times or more the total anion A molar concentration in the solution X;
condition (b): when the pH of the solution X is more than 1.4 and 1.9 or less, the molar concentration of aluminum is 0.4 times or more the total anion A molar concentration in the solution X;
condition (c): when the pH of the solution X is more than 1.9 and 2.4 or less, the molar concentration of aluminum is 0.3 times or more the total anion A molar concentration in the solution X; and
condition (d): when the pH of the solution X is more than 2.4 and 3.0 or less, the molar concentration of aluminum is 0.25 times or more the total anion A molar concentration in the solution X.

[5] The method for recovering an alkali metal salt according to any one of the above [1] to [4], in which a difference between a magnesium sulfate removal rate when a 2,000 mg/L magnesium sulfate aqueous solution having a temperature of 25°C and a pH of 6.5 is allowed to permeate the nanofiltration membrane at an operation pressure of 0.5 MPa and a magnesium chloride removal rate when a 2,000 mg/L magnesium chloride aqueous solution having a temperature of 25°C and a pH of 6.5 is allowed to permeate the nanofiltration membrane at an operation pressure of 0.5 MPa is 20% or less.
[6] The method for recovering an alkali metal salt according to any one of the above [1] to [5], in which a difference between a glucose removal rate when a 1,000 mg/L glucose aqueous solution having a temperature of 25°C and a pH of 6.5 is allowed to permeate the nanofiltration membrane at an operation pressure of 0.5 MPa and an isopropyl alcohol removal rate when a 1,000 mg/L isopropyl alcohol aqueous solution having a temperature of 25°C and a pH of 6.5 is allowed to permeate the nanofiltration membrane at an operation pressure of 0.5 MPa is 40% or more, and the glucose removal rate is 70% or more and 95% or less.
[7] The method for recovering an alkali metal salt according to any one of the above [1] to [6], in which the compound HA includes fluorine.
[8] The method for recovering an alkali metal salt according to any one of the above [1] to [7], in which the alkali metal salt includes lithium.
[9] An apparatus for recovering an alkali metal salt including:

a tank configured to store a solution containing an alkali metal ion;
an aluminum salt addition unit configured to add an aluminum salt to the solution; and
a nanofiltration unit configured to separate the alkali metal ion from the solution.

[10] The apparatus for recovering an alkali metal salt according to the above [9], further including a pH adjustment unit configured to adjust a pH of the solution.

ADVANTAGEOUS EFFECTS OF INVENTION

According to the method for recovering an alkali metal salt and the apparatus for recovering an alkali metal salt of the present invention, a salt of an alkali metal such as lithium or cesium can be recovered with a high purity and a high recovery rate from a solution containing the alkali metal ion.

DESCRIPTION OF EMBODIMENTS

Hereinafter, embodiments of the present invention are described in detail, but the present invention is not limited to the following embodiments and can be freely modified and implemented without departing from the gist of the present invention.

Note that, in the present description, the unit of a "molar concentration" is mol/L. In the present description, "mass" is synonymous with "weight".

<1> Method for Recovering Alkali Metal Salt

A method for recovering an alkali metal salt according to the present invention is a method for recovering an alkali metal salt from a solution X containing an alkali metal ion and at least one of a compound HA having a pKa of 3.0 or more and 5.0 or less and an anion A forming the compound HA, and includes the following steps (1) to (3).

(1) a pH adjustment step of adjusting a pH of the solution X to 0 or more and 4.0 or less when the pH is more than 4.0
(2) an aluminum salt addition step of adding an aluminum salt to the solution X such that a molar concentration (mol/L) of aluminum is 0.25 times or more a total anion A molar concentration (mol/L), which is a sum of a molar concentration (mol/L) of the compound HA in the solution X and a molar concentration (mol/L) of the anion A present as an ion in the solution X
(3) a nanofiltration step of separating, from the solution X after the step (1) and the step (2), the alkali metal ion to a permeation side by using a nanofiltration membrane

<2> Solution X

The solution X contains an alkali metal ion. The alkali metal ion contained in the solution X is an ion constituting an alkali metal salt, and the alkali metal salt is composed of an alkali metal ion and one or more conjugated bases (for example, a fluoride ion, a chloride ion, a nitrate ion, a sulfate ion, a carbonate ion, and an acetate ion). Examples of the alkali metal salt include salts of lithium, sodium, potassium, rubidium, and cesium, and from the viewpoint of the value of a recovery target, the solution X preferably contains a salt of lithium. That is, the solution X preferably contains a lithium ion (hereinafter, also referred to as "$Li^+$") as the alkali metal ion.

The solution X containing an alkali metal ion is preferably a solution in which a material containing lithium is dissolved in an acid. Specific examples of the material containing lithium include a waste material, a waste liquid, an ore, and a slag generated in a production process for a lithium ion battery.

A lithium ion battery includes members such as a positive electrode material, a negative electrode material, a separator, and an electrolyte. Among these members, any member containing lithium can be used as the material of the solution X. The acid for dissolving the material containing lithium preferably contains at least one acid selected from the group consisting of hydrochloric acid, sulfuric acid, and nitric acid.

Examples of the method of dissolving the material containing lithium in an acid include a method of immersing the material in an acidic aqueous solution. However, other methods may be used as long as the target alkali metal ion can be eluted.

In the case where the material containing lithium is an electrolyte, for example, $LiPF_6$ is contained in an organic solvent such as ethylene carbonate (EC) or dimethyl carbonate (DMC), and it is preferable to dilute an electrolytic solution with water from the viewpoint of separability of a nanofiltration membrane to be described later. By diluting the electrolytic solution with water, $LiPF_6$ in the electrolyte is hydrolyzed into hydrofluoric acid, phosphoric acid, and lithium hydroxide, lithium easily permeates the nanofiltration membrane, and fluorine easily forms a compound with aluminum as to be described later. The addition of aluminum promotes the hydrolysis of $LiPF_6$.

A temperature of the acidic aqueous solution to be brought into contact is preferably 10°C or higher and 100°C or lower, from the viewpoint of elution efficiency of the alkali metal ion. The temperature of the acidic aqueous solution is more preferably 20°C or higher and 90°C or lower, from the viewpoint of cost and safety.

A solution obtained by dissolving the material containing lithium in an acid does not always have a constant composition, and the composition may vary depending on a variation in various ionic compositions in the material, a dissolution condition in an acid, and the like.

The solution X contains at least one of a compound HA having a pKa of 3.0 or more and 5.0 or less and an anion A forming the compound HA. The compound HA generates the anion A by ionization. As a result of intensive studies, the inventors have found that the compound HA having a pKa of 3.0 or more and 5.0 or less and/or the anion A forming the compound HA forms a compound with an aluminum ion under an acidic condition at a pH of 4.0 or less, and a permeation rate of the nanofiltration membrane greatly decreases. Since the alkali metal salt as a recovery target permeates the nanofiltration membrane, the decrease in permeation rate of the compound HA and/or a compound formed of the anion A forming the compound HA contributes to improvement of a purity of the alkali metal salt in a permeated liquid that has permeated the nanofiltration membrane.

The pKa of the compound HA is more preferably 3.0 or more and 4.0 or less from the viewpoint of easily forming a compound with aluminum.

The pKa is defined by the following equation (1) using a concentration [HA] of the compound HA, a concentration [A] of the anion constituting the compound HA, and a concentration [H] of an acid at equilibrium in an ionization equilibrium formula HA → H + A at 25°C.

$$pKa = -\log([H] \times [A]/[HA]) \qquad (1)$$

The pKa can be determined by any method such as a titration method. Examples of the compound HA include hydrogen fluoride, acetic acid, and formic acid. Among them, the compound HA is more preferably hydrogen fluoride from the viewpoint of easily forming a compound with an aluminum ion.

When a concentration ratio of a total anion A molar concentration (mol/L) (hereinafter, simply referred to as a "total anion A molar concentration"), which is a sum of a molar concentration (mol/L) of the compound HA and a molar concentration (mol/L) of the anion A present as an ion in the solution X, to a molar concentration (mol/L) of the alkali metal ion as a recovery target in the solution X is defined as P, P is represented by the following equation (2).

Concentration ratio P = {total anion A molar concentration (mol/L)}/{molar concentration (mol/L) of alkali metal ion as recovery target} (2)

The total anion A molar concentration specifically corresponds to a sum of the concentration [HA] of the compound HA and the concentration [A] of the anion constituting the compound HA at equilibrium contained in the solution X. Note that, in the case where the anion A is derived only from the compound HA added to the solution X, the total anion concentration A corresponds to the anion concentration A when the compound HA is completely ionized.

The concentration ratio P of the solution X is preferably 0.01 or more and 10 or less, and more preferably 0.05 or more and 7 or less.

The solution X may contain an organic compound. In the case where the solution is an electrolytic solution of a lithium ion battery, the organic compound as described above is exemplified. Since these organic compounds may be foulants and cause a decrease in recovery efficiency of the alkali metal ion, the foulants may be removed by a pretreatment step to be described later.

In the case where the solution X contains a lithium ion as the alkali metal ion, a concentration of the lithium ion in the solution is preferably 0.5 mg/L or more and 10,000 mg/L or less. When the concentration of the lithium ion in the solution is 0.5 mg/L or more, the recovery efficiency of the lithium ion by membrane separation is improved. In addition, when the concentration of the lithium ion in the solution is 10,000 mg/L or less, an increase in osmotic pressure difference is prevented, and the membrane separation efficiency is improved. The concentration of the lithium ion in the solution is more preferably 10 mg/L or more and 8,000 mg/L or less, and still more preferably 100 mg/L or more and 6,000 mg/L or less.

<3> Step (1): pH Adjustment Step

The step (1) is a step of adjusting the pH of the solution X to 0 or more and 4.0 or less. The pH adjustment step is performed when the pH of the solution X is more than 4.0. When the pH of the solution X to be treated is 4.0 or less, a compound of an aluminum ion and the anion A ionized from the compound HA in the solution X and/or the anion A forming the compound HA contained in the solution X can be efficiently formed. In addition, when the pH of the solution X is 4.0 or less, precipitation of aluminum hydroxide on a membrane surface can be prevented in the nanofiltration step to be described later, and the membrane separation using the nanofiltration membrane can be efficiently performed.

Examples of a method of adjusting the pH of the solution X to 0 or more and 4.0 or less include a method of adding an acid.

The acid to be added is not particularly limited, and examples thereof include sulfuric acid, hydrochloric acid, and nitric acid.

The pH of the solution X is preferably adjusted to 0 or more and 3.0 or less, and more preferably adjusted to 1.0 or more and 3.0 or less. When the pH is 0 or more, deterioration of the nanofiltration membrane due to an acid can be prevented, and when the pH is 3.0 or less, alkali metal ion permeability through the nanofiltration membrane can be maintained high.

The pH adjustment step is preferably performed before the aluminum salt addition step to be described later. By performing the pH adjustment step before the aluminum salt addition step, the precipitation of aluminum hydroxide can be prevented, and the nanofiltration step to be described later can be efficiently performed.

<4> Step (2): Aluminum Salt Addition Step

The step (2) is a step of adding an aluminum salt having a molar concentration corresponding to 0.25 times or more a total anion A molar concentration (mol/L) (total anion A molar concentration), which is a sum of a molar concentration (mol/L) of the compound HA in the solution X and a molar concentration (mol/L) of the anion A present as an ion in the solution X. By adding the aluminum salt such that the molar concentration (mol/L) of aluminum is 0.25 times or more the total anion A molar concentration (mol/L), the anion A forming most of the compound HA in the solution X forms a compound with an aluminum ion, and is removed by the subsequent nanofiltration membrane.

For example, in the case where the anion A is a fluorine ion, when the molar concentration of the aluminum ion is relatively lower than a molar concentration of the fluorine ion, a compound $AlF_4^-$, which is a fluoride of the aluminum ion, is formed as a main component. As the molar concentration of the aluminum ion relative to the fluorine ion increases, the main component in the fluoride of the aluminum ion transitions to $AlF_4^- \rightarrow AlF_3 \rightarrow AlF_2^+ \rightarrow AlF^{2+}$.

The aluminum salt to be added in step (2) is not particularly limited, and examples thereof include aluminum sulfate, aluminum nitrate, and aluminum chloride.

The higher the pH, the more readily the aluminum ion forms a compound with the anion A. Therefore, an addition amount of the aluminum salt is preferably adjusted according to the pH of the solution X.

Specifically, the aluminum salt is added in an amount that satisfies any one of the following conditions (a) to (d).

Condition (a): when the pH of the solution X is 1.0 or more and 1.4 or less, the molar concentration of aluminum is 0.5 times or more the total anion A molar concentration in the solution X.

Condition (b): when the pH of the solution X is more than 1.4 and 1.9 or less, the molar concentration of aluminum is 0.4 times or more the total anion A molar concentration in the solution X.

Condition (c): when the pH of the solution X is more than 1.9 and 2.4 or less, the molar concentration of aluminum is 0.3 times or more the total anion A molar concentration in the solution X.

Condition (d): when the pH of the solution X is more than 2.4 and 3.0 or less, the molar concentration of aluminum is 0.25 times or more the total anion A molar concentration in the solution X.

In addition, the aluminum salt is added in an amount such that the molar concentration of aluminum is preferably 10 times or less, more preferably 1 time or less, and still more preferably 0.7 times or less the total anion A molar concentration. When the addition amount of the aluminum salt is 10 times or less, mixing of excessive aluminum into a permeated liquid in the subsequent nanofiltration step can be prevented. That is, it is preferable to adjust the molar concentration of aluminum to a range of 0.25 to 10 times the total anion A molar concentration, according to the pH of the solution X.

The metal ion concentrations can be determined by, for example, analyzing a solution to be measured using an ICP emission analyzer (for example, P-4010 type ICP (high-frequency inductively coupled plasma emission spectrometry) device manufactured by Hitachi, Ltd.) and quantifying the concentrations (mol/L) of various ions.

A means for measuring the total anion A concentration in the solution X is not particularly limited as long as the molar concentration of the compound HA in the solution X and the molar concentration of the anion A in the solution X can be measured, and for example, the total anion A molar concentration can be determined by performing analysis using an ion chromatography device in the case of an inorganic substance or a gas chromatography device in the case of an organic substance, and quantifying the concentrations (mol/L) of various ions. The ion chromatography device can measure the total anion A concentration as a concentration of the anion A when the compound HA is completely ionized.

In the case where a precipitate containing aluminum hydroxide is purified in the aluminum salt addition step, it is preferable to remove the precipitate by performing solid-liquid separation using a filter press or the like.

<5> Step (3): Nanofiltration Step

In the present invention, the solution X after being subjected to the step (1) and the step (2) (hereinafter, also referred to as a "solution X‴") is treated using a nanofiltration membrane to separate the alkali metal salt to a permeation side.

<5-1> Nanofiltration Membrane

The nanofiltration membrane used in the present embodiment has a fractionation characteristic positioned between a reverse osmosis membrane and an ultrafiltration membrane. A membrane generally known as a reverse osmosis membrane can remove most of organic substances and ions. On the other hand, an ultrafiltration membrane generally removes high molecular weight organic substances without removing most of the ion species.

In order to separate the alkali metal ion and a polyvalent metal ion, it is preferable that the nanofiltration membrane has a charge on the membrane surface and can perform both separation by pores (size separation) and electrostatic separation by charges. Such a nanofiltration membrane preferably satisfies one of the following condition 1 and condition 2.

<Condition 1 for Nanofiltration Membrane>

A difference between a magnesium sulfate removal rate when a 2,000 mg/L magnesium sulfate aqueous solution having a temperature of 25°C and a pH of 6.5 is allowed to permeate the nanofiltration membrane at an operation pressure of 0.5 MPa and a magnesium chloride removal rate when a 2,000 mg/L magnesium chloride aqueous solution having a temperature of 25°C and a pH of 6.5 is allowed to permeate the nanofiltration membrane at an operation pressure of 0.5 MPa is 20% or less.

<Condition 2 for Nanofiltration Membrane>

A difference between a glucose removal rate when a 1,000 mg/L glucose aqueous solution having a temperature of 25°C and a pH of 6.5 is allowed to permeate the nanofiltration membrane at an operation pressure of 0.5 MPa and an isopropyl alcohol removal rate when a 1,000 mg/L isopropyl alcohol aqueous solution having a temperature of 25°C and a pH of 6.5 is allowed to permeate the nanofiltration membrane at an operation pressure of 0.5 MPa is 40% or more, and the glucose removal rate is 70% or more and 95% or less.

Hereinafter, in the present description, simply the "magnesium sulfate removal rate" means a magnesium sulfate removal rate when a 2,000 mg/L magnesium sulfate aqueous solution having a temperature of 25°C and a pH of 6.5 is allowed to permeate at an operation pressure of 0.5 MPa, simply the "magnesium chloride removal rate" means an magnesium chloride removal rate when a 2,000 mg/L magnesium chloride aqueous solution having a temperature of 25°C and a pH of 6.5 is allowed to permeate at an operation pressure of 0.5 MPa, simply the "glucose removal rate" means a glucose removal rate when a 1,000 mg/L glucose aqueous solution having a temperature of 25°C and a pH of 6.5 is allowed to permeate at an operation pressure of 0.5 MPa, and simply the "isopropyl alcohol removal rate" means an isopropyl alcohol removal rate when a 1,000 mg/L isopropyl alcohol aqueous solution having a temperature of 25°C and a pH of 6.5 is allowed to permeate at an operation pressure of 0.5 MPa.

In the condition 1, the difference between the magnesium sulfate removal rate and the magnesium chloride removal rate is more preferably 15% or less. In the condition 2, it is more preferable that the difference between the glucose removal rate and the isopropyl alcohol removal rate is 50% or more, and the glucose removal rate is 80% or more and 90% or less.

It is more preferable that the nanofiltration membrane satisfies both the condition 1 and the condition 2.

When the glucose removal rate, the difference between the glucose removal rate and the isopropyl alcohol removal rate, and the difference between the magnesium sulfate removal rate and the magnesium chloride removal rate in the nanofiltration membrane are within the above ranges, selective separation and recovery of the alkali metal ion and the polyvalent metal ion can be operated with high efficiency for a long period of time, and a highly efficient process can be achieved.

In particular, the inventors of the present invention have found that, when the glucose removal rate and the difference between the glucose removal rate and the isopropyl alcohol removal rate are within the above ranges, selective separability between the alkali metal ion and the compound of the anion A and aluminum having various valences is high.

In addition, the inventors of the present invention have found that when the difference between the magnesium sulfate removal rate and the magnesium chloride removal rate is within the above range, the charge on the membrane surface is close to neutral, fouling due to inorganic scale such as aluminum fluoride is less likely to generate, and a long-term operation is possible. Inorganic scale is likely to generate during filtration in a region where the pH is relatively high.

As a material of the nanofiltration membrane, a polymer such as a cellulose acetate-based polymer, a polyamide, a sulfonated polysulfone, a polyacrylonitrile, a polyester, polyimide, or a vinyl polymer is used. The nanofiltration membrane may be composed of only one material or may be composed of a plurality of materials. In addition, a structure of the membrane may be an asymmetric membrane having a dense layer on at least one surface of the membrane and fine pores having a gradually large pore diameter from the dense layer toward the inside of the membrane or the other surface, or a composite semipermeable membrane having a very thin separation functional layer formed of another material on the dense layer of the asymmetric membrane.

The composite semipermeable membrane is preferably, for example, a membrane having a porous support membrane containing a polysulfone and a separation functional layer containing a polyamide provided on the porous support membrane. The composite semipermeable membrane may include a substrate in addition to the porous support membrane and the separation functional layer, and in this case, the porous support membrane is provided on the substrate. The polyamide is a thin membrane formed on the porous support membrane by a polycondensation reaction between a polyfunctional aliphatic amine and a polyfunctional aromatic acid halide.

The separation functional layer in the composite semipermeable membrane preferably contains 50 mass% or more, more preferably 80 mass% or more, and still more preferably 90 mass% or more, of a semi-aromatic crosslinked polyamide obtained by interfacial polycondensation between a divalent or higher polyfunctional aliphatic amine compound and a divalent or higher polyfunctional aromatic acid halide, and particularly preferably consists of only the semi-aromatic crosslinked polyamide. When the semi-aromatic crosslinked polyamide is contained in an amount of 50 mass% or more, excessive densification due to $\pi$-$\pi$ interaction derived from an aromatic ring in the semi-aromatic crosslinked polyamide is prevented, and excellent alkali metal ion permeability is obtained.

As a result of intensive studies, the inventors of the present invention have found that in the case where a relative humidity during the interfacial polycondensation is controlled to be 80% or more, the obtained composite semipermeable membrane exhibits particularly excellent membrane performance under an acidic condition. Note that, the relative humidity can be adjusted by using a precision air conditioner or the like.

The polyfunctional aliphatic amine is preferably an alicyclic diamine, and more preferably 4,4'-bipiperidine or a piperazine derivative.

The alicyclic diamine preferably has a molecular weight of 90 or more and 160 or less. When the molecular weight of the alicyclic diamine is 90 or more, a diffusion coefficient of the amine is reduced, and the polyamide is gradually formed during the interfacial polycondensation, so that a separation functional layer having a uniform pore diameter in a membrane thickness direction is easily formed from an initial stage to a middle stage of the polycondensation.

Generally, at the initial and final stages of the polycondensation, an oligomer is excessively generated on the surface of the support in contact with an organic layer, and pores on the surface of the support are blocked, which causes a pore diameter distribution in the membrane thickness direction to be non-uniform. However, when the molecular weight of the alicyclic diamine is 160 or less, the molecular weight of the generated oligomer is reduced and the interaction with the semi-aromatic crosslinked polyamide can be reduced, so that after the separation functional layer is formed by the polycondensation reaction, the oligomer is easily detached from the separation functional layer, and a separation functional layer having a uniform pore diameter in the membrane thickness direction is easily formed. In addition, when the molecular weight of the alicyclic diamine is 90 or more and 160 or less, a pore diameter of the membrane satisfying the condition 2 is easily formed.

Examples of the alicyclic diamine having a molecular weight of 90 or more and 160 or less include substituted piperazines in which a piperazine ring is substituted with an alkyl group having 1 to 3 carbon atoms (for example, 2-methylpiperazine, 2-ethylpiperazine, 2-normalpropylpiperazine, 2,2-dimethylpiperazine, 2,2-diethylpiperazine, 2,3-dimethylpiperazine, 2,3-diethylpiperazine, 2,5-dimethylpiperazine, 2,5-diethylpiperazine, 2,6-dimethylpiperazine, 2,6-diethylpiperazine, and 2,3,5,6-tetramethylpiperazine), and homopiperazine.

The "polyfunctional aromatic acid halide" is an aromatic acid halide having two or more halogenated carbonyl groups in one molecule, and is not particularly limited as long as it gives a semi-aromatic crosslinked polyamide by a reaction with the polyfunctional aliphatic amine. As the polyfunctional aromatic acid halide, for example, halides such as 1,3,5-benzenetricarboxylic acid, 1,2,4-benzenetricarboxylic acid, 1,3-benzenedicarboxylic acid, 1,4-benzenedicarboxylic acid, 1,3,5-benzenetrisulfonic acid, and 1,3,6-naphthalenetrisulfonic acid can be used. Among the polyfunctional aromatic acid halides, an acid chloride is preferred, and in terms of economic efficiency, availability, ease of handling, ease of reactivity, and the like, trimesoyl chloride which is an acid halide of 1,3,5-benzenetricarboxylic acid, isophthalic acid chloride which is an acid halide of 1,3-benzenedicarboxylic acid, terephthalic acid chloride which is an acid halide of 1,4-benzenedicarboxylic acid, 1,3,5-benzenetrisulfonic acid chloride which is an acid halide of 1,3,5-benzenetrisulfonic acid, and 1,3,6-naphthalenetrisulfonic acid chloride which is an acid halide of 1,3,6-naphthalenetrisulfonic acid are particularly preferred. The polyfunctional aromatic acid halide may be used alone or as a mixture of two or more kinds thereof. By mixing any one of bifunctional isophthalic acid chloride and terephthalic acid chloride with trifunctional trimesoyl chloride, 1,3,5-benzenetrisulfonic acid chloride, and 1,3,6-naphthalenetrisulfonic acid chloride, a molecular gap of a polyamide crosslinked structure is expanded, and a membrane having a uniform pore diameter distribution can be controlled in a wide range. A mixing molar ratio of the trifunctional acid chloride and the bifunctional acid chloride is preferably 1:20 to 50:1, and more preferably 1:1 to 20:1. In addition, by appropriately adjusting the ratio of the polyfunctional aromatic acid halide to the polyfunctional aliphatic amine added during the interfacial polycondensation, the pore diameter of the membrane satisfying the condition 1 is easily formed.

The above composite semipermeable membrane is obtained, for example, by forming a porous support membrane on a substrate, and then subjecting a polyfunctional aliphatic amine and a polyfunctional aromatic acid halide to polycondensation on the porous support membrane to form a separation functional layer containing a semi-aromatic crosslinked polyamide.

<5-2> Separation Using Nanofiltration Membrane

Since the alkali metal ion easily permeates the nanofiltration membrane and the aluminum ion hardly permeates the nanofiltration membrane, the alkali metal ion and a compound composed of aluminum and the anion A (hereinafter, also referred to as a "compound B") in the solution X after being subjected to the step (1) and the step (2) (solution X') can be separated. The nanofiltration membrane is preferably used in a state of being incorporated into an element such as a spiral type.

By feeding the solution X' to a nanofiltration membrane unit, a permeated liquid having a small concentration ratio P and a concentrated liquid having a large concentration ratio P with respect to the solution X' can be obtained. The alkali metal ion that easily permeates the nanofiltration membrane is separated to the permeation side.

In order to increase the purity of the alkali metal salt, the permeated liquid may be once more allowed to permeate the nanofiltration membrane unit to obtain a permeated liquid having a lower concentration ratio P. Nanofiltration of the permeated liquid may be performed a plurality of times.

In the nanofiltration step, the solution is preferably supplied to the nanofiltration membrane at an operation pressure in a range of 0.1 MPa or more and 8 MPa or less. When the operation pressure is 0.1 MPa or more, a membrane permeation rate is increased, and when the operation pressure is 8 MPa or less, damage to the nanofiltration membrane can be prevented. The operation pressure is more preferably 0.5 MPa or more and 6 MPa or less, and still more preferably 1 MPa or more and 4 MPa or less.

<6> Concentration Step

An alkali metal ion concentration (mg/L) in the permeated liquid at the last stage of nanofiltration membrane unit is preferably 1 mg/L or more, more preferably 10 mg/L or more, and still more preferably 100 mg/L or more. When the alkali metal ion concentration is 1 mg/L or more, the recovery efficiency of the alkali metal salt in the subsequent stage is improved.

When it is desired to increase the alkali metal ion concentration (mg/L) in the permeated liquid at the last stage of nanofiltration membrane unit, the permeated liquid at the last stage of nanofiltration membrane unit may be concentrated. A concentration method is not particularly limited, and examples thereof include concentration by evaporation and concentration using a reverse osmosis membrane.

<7> Organic Substance Removal Step

An organic substance removal step may be performed on the solution X' before the nanofiltration step on the solution X'. In the case where the solution X' is a solution which contains an electrolyte and in which an organic solvent and water are separated from each other, it is preferable to separate an oil phase and an aqueous phase using any oil-water separation. The organic substance dissolved in water is preferably removed using an ultrafiltration membrane. Since high molecular weight organic substances can be removed by ultrafiltration, fouling of the nanofiltration membrane can be prevented by removing the high molecular weight organic substances. The aqueous phase in the oil-water separation or permeated water in the ultrafiltration is used in the nanofiltration step on the solution X'.

<8> Recovery Step

In this step, the alkali metal salt is recovered from the permeated liquid (alkali metal salt aqueous solution) obtained in the step (3), that is, the nanofiltration step.

The recovery of the alkali metal salt can be performed by a known method, and for example, in the case where the alkali metal salt is a potassium salt, the recovery is performed by utilizing temperature dependence of solubility or adding a poor solvent such as ethanol.

The lithium salt has solubility lower than that of other alkali metal salts. For example, sodium carbonate and potassium carbonate have high solubility in water (20 g or more with respect to 100 mL of water), but only 1.33 g of lithium carbonate is dissolved in 100 mL of water at 25°C. Therefore, lithium can be recovered as lithium carbonate by adding a carbonate to the permeated liquid. Since the solubility of lithium carbonate further decreases at a high temperature, the aqueous solution may be heated.

<Recovery Apparatus>

An apparatus for recovering an alkali metal salt according to the present invention for performing the method for recovering an alkali metal salt according to the present invention includes a tank configured to store a solution containing an alkali metal ion (solution X), an aluminum salt addition unit configured to add an aluminum salt to the solution, and a nanofiltration unit configured to separate the alkali metal ion from the solution. It is more preferable that the recovery apparatus according to the present invention further includes a pH adjustment unit configured to adjust a pH of the solution.

The nanofiltration unit preferably includes a pressure vessel (hereinafter, also referred to as a "vessel") filled with a spiral-type element (hereinafter, also referred to as a "nanofiltration membrane element") in which a nanofiltration membrane capable of separating an alkali metal ion is incorporated, and a nanofiltration membrane unit capable of supplying a solution to the vessel by a high pressure pump. In the nanofiltration membrane unit, a plurality of vessels may be connected in parallel or in series, and a plurality of nanofiltration membrane elements may be filled in each vessel. The nanofiltration membrane element may have any diameter and length. A size of the nanofiltration membrane element varies depending on a membrane area, and with the same membrane type, a larger amount of solution can be treated per unit time as the membrane area increases. A size and number of the nanofiltration membrane element can be freely determined according to the scale of the solution to be treated.

The aluminum salt addition unit included in the recovery apparatus according to the present invention is not particularly limited as long as it has a mechanism capable of adding an aluminum salt to the solution. For example, it may be a facility in which an aluminum salt is added as a solid to a tank including a stirring unit and storing a solution, or a facility in which an aluminum salt is directly added to a solution by a chemical injection pump from a tank storing an aqueous solution of a high concentration aluminum salt. Among them, from the viewpoint of the size of the facility and the solubility of the aluminum salt in the solution, it is preferable to have a mechanism of adding the aluminum salt to the solution by a chemical injection pump from a tank storing a high concentration aluminum salt.

Examples of a method of adding a high concentration aluminum salt by a chemical injection pump include a flow rate proportional method in which a certain amount of an aluminum salt aqueous solution at a high concentration is added by a chemical injection pump in proportion to a permeation flow rate of the nanofiltration unit, and a timer method in which a certain amount of an aluminum salt aqueous solution at a high concentration is added by a chemical injection pump at a constant interval. Among them, a flow rate proportional method is more preferred.

The pH adjustment unit is not particularly limited as long as it has a mechanism capable of adjusting the pH of the solution. For example, a chemical injection pump for adding an acidic or alkaline aqueous solution to the solution and a facility for measuring the pH of the solution, such as a pH meter, are mounted in a tank for storing the solution. Further, it is preferable to have a mechanism of feeding back the pH value of the solution to the chemical injection pump to adjust the pH of the solution.

Examples

Hereinafter, the present invention will be described with reference to Examples, but the present invention is not limited to these Examples.

Measurements of Examples and Comparative Examples were performed as follows.

<Performance of Nanofiltration Membrane>

(Glucose Removal Rate and Isopropyl Alcohol Removal Rate of Nanofiltration Membrane)

The isopropyl alcohol removal rate and the glucose removal rate were calculated based on concentrations of glucose in feed water and in permeated water when a 1,000 mg/L glucose aqueous solution having a temperature of 25°C and a pH of 6.5 as the feed water was allowed to permeate the nanofiltration membrane at an operation pressure of 0.5 MPa, and concentrations of isopropyl alcohol in feed water and in permeated water when a 1,000 mg/L isopropyl alcohol aqueous solution having a temperature of 25°C and a pH of 6.5 as the feed water allowed to permeate the nanofiltration membrane at an operation pressure of 0.5 MPa, according to the following equations.

Isopropyl alcohol removal rate (%) = 100 × {1 - (concentration of isopropyl alcohol in permeated water/concentration of isopropyl alcohol in feed water)} Glucose removal rate (%) = 100 × {1- (concentration of glucose in permeated water/concentration of glucose in feed water)}

**EP 4 703 326 A1**

Note that, the concentration of isopropyl alcohol was determined using a gas chromatograph (GC-18A manufactured by Shimadzu Corporation), and the concentration of glucose was determined using a refractometer (RID-6A manufactured by Shimadzu Corporation).

(Magnesium Sulfate Removal Rate and Magnesium Chloride Removal Rate of Nanofiltration Membrane)

Concentrations of magnesium sulfate ($MgSO_4$) in feed water and in permeated water when a 2,000 mg/L magnesium sulfate aqueous solution having a temperature of 25°C and a pH of 6.5 as the feed water was allowed to permeate the nanofiltration membrane at an operation pressure of 0.5 MPa, and concentrations of magnesium chloride ($MgCl_2$) in feed water and in permeated water when a 2,000 mg/L magnesium chloride aqueous solution having a temperature of 25°C and a pH of 6.5 as the feed water was allowed to permeate the nanofiltration membrane at an operation pressure of 0.5 MPa were measured.

As the concentration of $MgSO_4$ and the concentration of $MgCl_2$, electric conductivities of the feed water and the permeated water were measured by using an electric conductivity meter manufactured by DKK-TOA CORPORATION, and the respective practical salts, that is, the concentration of $MgSO_4$ and the concentration of $MgCl_2$ were obtained. The $MgSO_4$ removal rate and the $MgCl_2$ removal rate were calculated based on the concentration of $MgSO_4$, the concentration of $MgCl_2$, and the following equation.

$MgSO_4$ removal rate (%) = 100 $\times$ {1 - (concentration of $MgSO_4$ in permeated water/concentration of $MgSO_4$ in feed water)}

$MgCl_2$ removal rate (%) = 100 $\times$ {1- (concentration of $MgCl_2$ in permeated water/concentration of $MgCl_2$ in feed water)}

<Nanofiltration Membrane>

(Nanofiltration Membrane A)

A 18.0 mass% dimethylformamide (DMF) solution of polysulfone was cast at a thickness of 180 $\mu$m at room temperature (25°C) onto a nonwoven fabric (air permeability: 1 cc/cm$^2$/s) made of a polyester fiber, immediately immersed in pure water, and left to stand for 5 minutes to prepare a porous support membrane (thickness: 160 $\mu$m) made of a fiber-reinforced polysulfone.

Next, a membrane surface temperature of the porous support membrane was adjusted to 25°C while blowing air adjusted to 25°C to the porous support membrane to remove excess moisture. The surface of the porous support membrane was coated with an aqueous solution at 30°C in which 2.0 mass% of piperazine, 250 ppm of sodium dodecyl diphenyl ether disulfonate, and 1.0 mass% of trisodium phosphate were dissolved, and was allowed to stand for 15 seconds, and then nitrogen was blown from an air nozzle to remove excess aqueous solution, to thereby form a coating layer of an amine aqueous solution on the porous support membrane. Further, the entire surface of the porous support membrane was uniformly coated with an n-decane solution at 38°C containing 0.2 mass% of trimesoyl chloride (hereinafter, referred to as "TMC"), and then allowed to stand at a relative humidity of 70% and a temperature of 25°C for 1 minute to perform interfacial polycondensation, and two fluids (pure water and air) were blown onto the membrane surface to remove the solution on the surface. Thereafter, the membrane was washed with pure water at 80°C to obtain a nanofiltration membrane A.

(Nanofiltration Membrane B)

A nanofiltration membrane B was obtained by preparing a nanofiltration membrane in the same manner as in the nanofiltration membrane A, except that 2,5-dimethylpiperazine was used as piperazine, and the entire surface of the porous support membrane was uniformly coated with an n-decane solution at 38°C containing 0.2 mass% of TMC and then allowed to stand at a relative humidity of 80% and 25°C for 1 minute.

(Nanofiltration Membrane C)

A nanofiltration membrane C was obtained by preparing a nanofiltration membrane in the same manner as in the nanofiltration membrane A except that the TMC concentration was set to 0.5 mass%.

Table 1 shows the membrane performance of the nanofiltration membrane A, the nanofiltration membrane B, and the nanofiltration membrane C.

[Table 1]

Table 1

|  | Glucose removal rate | Isopropyl alcohol removal rate | MgCl$_2$ removal rate | MgSO$_4$ removal rate |
|---|---|---|---|---|
|  | (%) | (%) | (%) | (%) |
| Nanofiltration membrane A | 96.1 | 40.7 | 86.2 | 99.8 |
| Nanofiltration membrane B | 81.0 | 26.1 | 86.7 | 99.6 |
| Nanofiltration membrane C | 95.8 | 38.1 | 74.2 | 99.1 |

<Solution to be Treated>

(Solutions Xa to Xf)

Non Patent Literature 1 describes a 1.0 mol/L LiPF$_6$ solution as an electrolytic solution on p. 282, line 14. Solutions Xa to Xf were prepared by simulating a molar concentration solution of lithium (Li) and fluorine (F) when the electrolytic solution was diluted 10-fold with water, adding Li$_2$SO$_4$ and HF to water so as to be 0.05 mol/L and 0.60 mol/L respectively, and adjusting the pH with sodium hydroxide or sulfuric acid so as to have the pH described in Table 2. Note that, in Table 2, Li and F are molar concentrations in a completely ionized state.

[Table 2]

Table 2

|  |  | pH | Li | F |
|---|---|---|---|---|
|  | Notation | - | mol/L | mol/L |
| Solution | Xa | 1.0 | 0.10 | 0.60 |
|  | Xb | 1.5 | 0.10 | 0.60 |
|  | Xc | 2.0 | 0.10 | 0.60 |
|  | Xd | 2.5 | 0.10 | 0.60 |
|  | Xe | 3.5 | 0.10 | 0.60 |
|  | Xf | 6.0 | 0.10 | 0.60 |

(Solution Xa-2)

A solution Xa-2 containing no fluorine but an acetate ion at the same molar concentration as in the solution Xa was prepared as the compound HA.

(Solution Xa-3)

A solution Xa-3 containing no fluorine but a formate ion at the same molar concentration as in the solution Xa was prepared as the compound HA.

(Solution Xa-4)

A solution Xa-4 containing no fluorine but a phosphate ion at the same molar concentration as in the solution Xa was prepared as the compound HA.

(Solution Xa-5)

A solution Xa-5 containing no fluorine but a cyanide ion at the same molar concentration as in the solution Xa was prepared as the compound HA.

<Evaluation Regarding Nanofiltration Step>

(Concentration Ratio P)

The concentration ratio P was calculated based on the following equation using the molar concentrations of various ions in the solution.

Concentration ratio P = {total anion A molar concentration (mol/L) in solution}/{molar concentration (mol/L) of lithium ion}

(Pressure Ratio)

The nanofiltration membrane was used for constant flow rate filtration by a cross flow filtration method under the conditions of permeated liquid flow rate: concentrated liquid flow rate = 1:9 and a permeated flux of 0.4 $m^2/m^3$/s. A ratio of the operation pressure (MPa) after 24 hours to the operation pressure (MPa) after 1 hour from the start of the constant flow rate operation was defined as a pressure ratio. The higher the pressure ratio, the more the nanofiltration membrane is fouled.

(Example 1)

Aluminum sulfate was added to the solution Xa at 25°C such that the concentration of Al was 0.20 mol/L, and the nanofiltration membrane A was subjected to constant flow rate filtration by a cross flow filtration method under the conditions of permeated liquid flow rate: concentrated liquid flow rate = 1:9 and a permeated flux of 0.4 $m^2/m^3$/s.

(Example 2)

Example 2 was carried out in the same manner as Example 1, except that Aluminum sulfate was added such that the concentration of Al was 0.25 mol/L.

(Example 3)

Example 3 was carried out in the same manner as Example 1, except that Aluminum sulfate was added such that the concentration of A1 was 0.30 mol/L.

(Example 4)

Example 4 was carried out in the same manner as Example 1, except that the solution Xb was used instead of the solution Xa.

(Example 5)

Example 5 was carried out in the same manner as Example 4, except that Aluminum sulfate was added such that the concentration of Al was 0.25 mmol/L.

(Example 6)

Example 6 was carried out in the same manner as Example 1, except that the solution Xc was used instead of the solution Xa.

(Example 7)

Example 7 was carried out in the same manner as Example 1, except that the solution Xd was used instead of the solution Xa.

(Example 8)

Example 8 was carried out in the same manner as Example 1, except that the solution Xe was used instead of the solution Xa.

(Example 9)

Example 9 was carried out in the same manner as Example 5, except that the nanofiltration membrane B was used instead of the nanofiltration membrane A.

(Example 10)

Example 10 was carried out in the same manner as Example 1, except that the solution Xa-2 was used instead of the solution Xa.

(Example 11)

Example 11 was carried out in the same manner as Example 1, except that the solution Xa-3 was used instead of the solution Xa.

(Example 12)

Example 12 was carried out in the same manner as Example 8, except that the nanofiltration membrane B was used instead of the nanofiltration membrane A.

(Example 13)

Example 13 was carried out in the same manner as Example 8, except that the nanofiltration membrane C was used instead of the nanofiltration membrane A.

(Comparative Example 1)

Comparative Example 1 was carried out in the same manner as Example 1, except that aluminum sulfate was not added.

(Comparative Example 2)

Comparative Example 2 was carried out in the same manner as Example 1, except that Aluminum sulfate was added such that the concentration of Al was 0.05 mmol/L.

(Comparative Example 3)

Comparative Example 3 was carried out in the same manner as Example 1, except that the solution Xf was used instead of the solution Xa. As a result, the membrane surface was blocked by a precipitate in the nanofiltration step, and filtration could not be performed.

(Comparative Example 4)

Comparative Example 4 was carried out in the same manner as Example 1, except that the solution Xa-4 was used instead of the solution Xa.

(Comparative Example 5)

Comparative Example 5 was carried out in the same manner as Example 1, except that the solution Xa-5 was used instead of the solution Xa.

The analysis results of the composition and the pressure ratio of the initially permeated liquid after 1 hour from the start of the constant flow rate operation performed on Examples 1 to 13 and Comparative Examples 1, 2, 4, and 5 are shown in Tables 3 and 4. Note that, the molar ratio of "Al/total anion A" in Tables 3 and 4 is determined based on the concentration of the anion A when the compound HA is completely ionized.

[Table 3]

Table 3

|  |  |  |  | Ex. 1 | Ex. 2 | Ex. 3 | Ex. 4 | Ex. 5 | Ex. 6 | Ex. 7 |
|---|---|---|---|---|---|---|---|---|---|---|
| Solution X | | Notation | - | Xa | Xa | Xa | Xb | Xb | Xc | Xd |
|  | | pH | - | 1.0 | 1.0 | 1.0 | 1.5 | 1.5 | 2.0 | 2.5 |
|  | Compound HA | Anion species | F- | F- | F- | F- | F- | F- | F- | F- |
|  |  | pKa | 3.2 | 3.2 | 3.2 | 3.2 | 3.2 | 3.2 | 3.2 | |
|  | | Concentration ratio P | - | 6.0 | 6.0 | 6.0 | 6.0 | 6.0 | 6.0 | 6.0 |
| Solution X after adding Al (solution X') | | Concentration of Al | mol/L | 0.20 | 0.25 | 0.30 | 0.20 | 0.25 | 0.20 | 0.20 |
|  | | Al/total anion A | Molar ratio | 0.33 | 0.42 | 0.50 | 0.33 | 0.42 | 0.33 | 0.33 |
| Nanofiltration membrane | | Membrane type | - | A | A | A | A | A | A | A |
| Initial permeated liquid | | Concentration of Li | mmol/L | 32 | 31 | 31 | 31 | 30 | 29 | 24 |
|  | | Anion A concentration | mmol/L | 54 | 18 | 4.2 | 19 | 5.0 | 5.2 | 5.2 |
|  | | Concentration ratio P | - | 1.7 | 0.57 | 0.14 | 0.62 | 0.16 | 0.18 | 0.21 |
|  | | Pressure ratio | - | 1.0 | 1.0 | 1.0 | 1.0 | 1.0 | 1.0 | 1.1 |

|  |  |  |  | Ex. 8 | Ex. 9 | Ex. 10 | Ex. 11 | Ex. 12 | Ex. 13 |
|---|---|---|---|---|---|---|---|---|---|
| Solution X | | Notation | - | Xe | Xb | Xa-2 | Xa-3 | Xe | Xe |
|  | | pH | - | 3.5 | 1.5 | 1.0 | 1.0 | 3.5 | 3.5 |
|  | Compound HA | Anion species | F- | F- | $CH_3COO-$ | HCOO- | F- | F- | |
|  |  | pKa | 3.2 | 3.2 | 4.7 | 3.6 | 3.2 | 3.2 | |
|  | | Concentration ratio P | - | 6.0 | 6.0 | 6.0 | 6.0 | 6.0 | 6.0 |
| Solution X after adding Al (solution X') | | Concentration of Al | mol/L | 0.20 | 0.25 | 0.20 | 0.20 | 0.20 | 0.20 |
|  | | Al/total anion A | Molar ratio | 0.33 | 0.42 | 0.33 | 0.33 | 0.33 | 0.33 |
| Nanofiltration membrane | | Membrane type | - | A | B | A | A | B | C |

(continued)

|  |  |  | Ex. 8 | Ex. 9 | Ex. 10 | Ex. 11 | Ex. 12 | Ex. 13 |
|---|---|---|---|---|---|---|---|---|
| Initial permeated liquid | Concentration of Li | mmol/L | 16 | 52 | 34 | 31 | 24 | 16 |
|  | Anion A concentration | mmol/L | 5.1 | 5.2 | 48 | 30 | 5.8 | 5.3 |
|  | Concentration ratio P | - | 0.32 | 0.10 | 1.4 | 0.96 | 0.24 | 0.32 |
|  | Pressure ratio | - | 1.2 | 1.0 | 1.0 | 1.0 | 1.1 | 1.3 |

[Table 4]

Table 4

|  |  |  | Comp. Ex. 1 | Comp. Ex. 2 | Comp. Ex. 3 | Comp. Ex. 4 | Comp. Ex. 5 |
|---|---|---|---|---|---|---|---|
| Solution X | Notation | - | Xa | Xa | Xf | Xa-4 | Xa-5 |
|  | pH | - | 1.0 | 1.0 | 6.0 | 1.0 | 1.0 |
|  | Compound HA — Anion species | | F- | F- | F- | $H_2PO_4^-$ | CN- |
|  | Compound HA — pKa | | 3.2 | 3.2 | 3.2 | 2.2 | 9.2 |
|  | Concentration ratio | - | 6.0 | 6.0 | 6.0 | 6.0 | 6.0 |
| Solution X after adding Al (solution X') | Concentration of Al | mol/L | - | 0.05 | 0.20 | 0.20 | 0.20 |
|  | Al/total anion A | Molar ratio | - | 0.08 | 0.33 | 0.33 | 0.33 |
| Nanofiltration membrane | Membrane type | - | A | A | A | A | A |
| Initial permeated liquid | Concentration of Li | mmol/L | 32 | 33 | - | 32 | 32 |
|  | Anion A concentration | mmol/L | 456 | 150 | - | 360 | 480 |
|  | Concentration ratio P | - | 14 | 4.6 | - | 11 | 15 |
|  | Pressure ratio | - | 1.0 | 1.0 | - | 1.0 | 1.0 |

In the above Examples and Comparative Examples, the lower the concentration ratio of the permeated liquid of the nanofiltration membrane and the lower the pressure ratio, the more advantageous.

As can be seen from the above results, in Examples 1 to 13, which correspond to the method for recovering an alkali metal salt according to the present invention, the alkali metal salt can be recovered with a higher purity with respect to impurities such as fluorine, as compared with Comparative Examples 1 to 5.

Although the present invention has been described in detail with reference to specific embodiments, it is apparent to those skilled in the art that various changes and modifications may be made without departing from the spirit and scope of the present invention. The present application is based on Japanese Patent Application No. 2023-075075 filed on April 28, 2023, the content of which is incorporated herein by reference.

INDUSTRIAL APPLICABILITY

The present invention can be suitably used as a method for efficiently separating and recovering an alkali metal such as lithium from a waste material, a waste liquid, an ore, and a slag generated in a production process for a lithium ion battery.

**Claims**

1. A method for recovering an alkali metal salt from a solution X containing an alkali metal ion and at least one of a compound HA having a pKa of 3.0 or more and 5.0 or less and an anion A forming the compound HA, the method comprising the following steps (1) to (3),

   (1) a pH adjustment step of adjusting a pH of the solution X to 0 or more and 4.0 or less when the pH is more than 4.0;
   (2) an aluminum salt addition step of adding an aluminum salt to the solution X such that a molar concentration (mol/L) of aluminum is 0.25 times or more a total anion A molar concentration (mol/L), which is a sum of a molar concentration (mol/L) of the compound HA in the solution X and a molar concentration (mol/L) of the anion A present as an ion in the solution X; and
   (3) a nanofiltration step of separating, from the solution X after the step (1) and the step (2), the alkali metal ion to a permeation side by using a nanofiltration membrane.

2. The method for recovering an alkali metal salt according to claim 1, wherein the pH of the solution X is adjusted to 1.0 or more and 3.0 or less in the step (1).

3. The method for recovering an alkali metal salt according to claim 1 or 2, wherein the pKa of the compound HA is 3.0 or more and 4.0 or less.

4. The method for recovering an alkali metal salt according to claim 1 or 2, wherein in the step (2), the aluminum salt is added to the solution X so as to satisfy any one of the following conditions (a) to (d),

   condition (a): when the pH of the solution X is 1.0 or more and 1.4 or less, the molar concentration of aluminum is 0.5 times or more the total anion A molar concentration in the solution X;
   condition (b): when the pH of the solution X is more than 1.4 and 1.9 or less, the molar concentration of aluminum is 0.4 times or more the total anion A molar concentration in the solution X;
   condition (c): when the pH of the solution X is more than 1.9 and 2.4 or less, the molar concentration of aluminum is 0.3 times or more the total anion A molar concentration in the solution X; and
   condition (d): when the pH of the solution X is more than 2.4 and 3.0 or less, the molar concentration of aluminum is 0.25 times or more the total anion A molar concentration in the solution X.

5. The method for recovering an alkali metal salt according to claim 1 or 2, wherein a difference between a magnesium sulfate removal rate when a 2,000 mg/L magnesium sulfate aqueous solution having a temperature of 25°C and a pH of 6.5 is allowed to permeate the nanofiltration membrane at an operation pressure of 0.5 MPa and a magnesium chloride removal rate when a 2,000 mg/L magnesium chloride aqueous solution having a temperature of 25°C and a pH of 6.5 is allowed to permeate the nanofiltration membrane at an operation pressure of 0.5 MPa is 20% or less.

6. The method for recovering an alkali metal salt according to claim 1 or 2, wherein a difference between a glucose removal rate when a 1,000 mg/L glucose aqueous solution having a temperature of 25°C and a pH of 6.5 is allowed to permeate the nanofiltration membrane at an operation pressure of 0.5 MPa and an isopropyl alcohol removal rate when a 1,000 mg/L isopropyl alcohol aqueous solution having a temperature of 25°C and a pH of 6.5 is allowed to permeate the nanofiltration membrane at an operation pressure of 0.5 MPa is 40% or more, and the glucose removal rate is 70% or more and 95% or less.

7. The method for recovering an alkali metal salt according to claim 1 or 2, wherein the compound HA includes fluorine.

8. The method for recovering an alkali metal salt according to claim 1 or 2, wherein the alkali metal salt includes lithium.

9. An apparatus for recovering an alkali metal salt comprising:

a tank configured to store a solution containing an alkali metal ion;
an aluminum salt addition unit configured to add an aluminum salt to the solution; and
a nanofiltration unit configured to separate the alkali metal ion from the solution.

10. The apparatus for recovering an alkali metal salt according to claim 9, further comprising a pH adjustment unit configured to adjust a pH of the solution.

## INTERNATIONAL SEARCH REPORT

| | International application No. |
|---|---|
| | **PCT/JP2024/016357** |

**A. CLASSIFICATION OF SUBJECT MATTER**

*C01D 7/00*(2006.01)i; *B01D 61/02*(2006.01)i
FI:    C01D7/00 Z; B01D61/02 500

According to International Patent Classification (IPC) or to both national classification and IPC

**B. FIELDS SEARCHED**

Minimum documentation searched (classification system followed by classification symbols)

C01D7/00; B01D61/02; C22B7/00; C22B26/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-036419 A (SUMITOMO METAL MINING CO., LTD.) 23 February 2012 (2012-02-23)<br>claims, paragraphs [0024]-[0041] | 1-10 |
| Y | JP 2016-003382 A (SUMITOMO METAL MINING CO., LTD.) 12 January 2016 (2016-01-12)<br>claims, paragraph [0043] | 1-10 |
| Y | WO 2023/058548 A1 (TORAY INDUSTRIES, INC.) 13 April 2023 (2023-04-13)<br>claims, paragraphs [0001]-[0008], [0032] | 1-10 |
| X | CN 112853120 A (QUZHOU HUAYOU RESOURCES RECYCLING TECHNOLOGY CO., LTD.) 28 May 2021 (2021-05-28)<br>claims | 9-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/016357**

| Patent document cited in search report | | | Publication date (day/month/year) | Patent family member(s) | Publication date (day/month/year) |
|---|---|---|---|---|---|
| JP | 2012-036419 | A | 23 February 2012 | (Family: none) | |
| JP | 2016-003382 | A | 12 January 2016 | (Family: none) | |
| WO | 2023/058548 | A1 | 13 April 2023 | (Family: none) | |
| CN | 112853120 | A | 28 May 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005197149 A

- JP 2023075075 A

**Non-patent literature cited in the description**

- **TETSUYA KAWAMURA**. Decomposition Reaction of LiPF6 Electrolytic Solution for Lithium Battery. *Engineering Sciences Reports of Kyushu University, Interdisciplinary Graduate School of Engineering Sciences of Kyushu University*, December 2002, vol. 24 (3), 281-288